# EUROPÄISCHE PATENTSCHRIFT

(11) **EP 3 423 174 B1**
(45) Veröffentlichungstag und Bekanntmachung des Hinweises auf die Patenterteilung: **21.08.2024**
(21) Anmeldenummer: 17719151.7
(22) Anmeldetag: 28.02.2017
(51) Int. Cl.: B01D 65/10, B01J 20/18, B01J 20/28, B01J 20/32, B01J 29/00, B01D 67/00, B01D 71/02

(54) **PERMEATIONSMEMBRAN UND VERFAHREN ZUR HERSTELLUNG EINER PERMEATIONSMEMBRAN**
PERMEATION MEMBRANE AND METHOD FOR PRODUCING A PERMEATION MEMBRANE
MEMBRANE DE PERMÉATION ET PROCÉDÉ DE PRODUCTION D'UNE MEMBRANE DE PERMÉATION

(30) Priorität: 01.03.2016 DE 102016103645
(43) Veröffentlichungstag der Anmeldung: 09.01.2019
(73) Patentinhaber: Fraunhofer-Gesellschaft zur Förderung der angewandten Forschung e.V., 80686 München (DE); Friedrich-Alexander-Universität Erlangen-Nürnberg, 91054 Erlangen (DE)
(72) Erfinder: RICHTER, Hannes, 07629 Hermsdorf (DE); SIMON, Adrian, 06722 Wetterzeube (DE); JÜTTKE, Yvonne, 01279 Dresden (DE); SCHWIEGER, Wilhelm, 91080 Spardorf (DE); SCHÜLEIN, Marion, 91717 Wassertrüdingen (DE); LÜDKE, Dirk, 74564 Crailsheim (DE); REIF, Benjamin, 91413 Neustadt an der Aisch (DE)
(74) Vertreter: Pfenning, Meinig & Partner mbB
(86) Internationale Anmeldenummer: PCT/DE2017/100156
(87) Internationale Veröffentlichungsnummer: WO 2017/148473

(56) Entgegenhaltungen:
- EP-A1- 1 118 378
- DE-T2- 69 523 760
- US-B1- 6 494 326
- US-B1- 7 041 616
- YAN Y ET AL: "Preparation of highly selective zeolite ZSM-5 membranes by a post-synthetic coking treatment", JOURNAL OF MEMBRANE SCIENCE, ELSEVIER BV, NL, vol. 123, no. 1, 8 January 1997 (1997-01-08), pages 95 - 103, XP004015143, ISSN: 0376-7388, DOI: 10.1016/S0376-7388(96)00206-2
- MIKIHIRO NOMURE ET AL: "Silicalite Membranes Modified by Counterdiffusion CVD Technique", INDUSTRIAL & ENGINEERING CHEMISTRY RESEARCH, AMERICAN CHEMICAL SOCIETY, US, vol. 36, 15 August 1997 (1997-08-15), pages 4217 - 4223, XP002565332, ISSN: 0888-5885, DOI: 10.1021/IE970338A

## Beschreibung

Die Erfindung betrifft ein Verfahren zur Herstellung einer Permeationsmembran. Die Permeationsmembran ist im Bereich von membranbasierten Stofftrennungen einsetzbar, insbesondere aber für die Abtrennung von Wasser aus Gasströmen. Ideale Zeolithmembranen aus mikroporösen, kristallinen Aluminosilkaten, mit einer offen, dreidimensionalen Gitterstruktur aus Poren und Kavitäten in molekularen Dimensionen und ohne zwischenkristalline Poren können in der petrochemischen Industrie und für die Produktion von Feinchemikalien von großem Interesse sein. Wie verschiedene Reviews über Zeolithmembranen nun zeigen, haben solche Membranen ein enormes Potential für praktische Anwendungen in industriellen Gastrennverfahren [z. B. E.E. McLeary, J.C. Jansen, F. Kapteijn, Zeolite based films, membranes and membrane reactors: Progress and prospects, Microporous Mesoporous Mater., 90 (2006) 198-220]. In jüngster Zeit wurden viele Berichte über die Entwicklung von Zeolithmembranen mit einem MFI-Gerüst veröffentlicht, da diese Zeolithmembranen im Vergleich zu anderen relativ einfach herzustellen sind [M. Noack, M. Schneider, A. Dittmar, G. Georgi, J. Caro, The change of the unit cell dimension of different zeolite types by heating and its influence on supported membrane layers, Microporous Mesoporous Mater., 1 17 (2009) 10-21]. Auch andere Zeolithmembranen aus LTA, BEA, FAU, MOR, FER und CHA Gerüsten wurden aufgrund ihres großen Anwendungspotentials intensiv untersucht. Trotz der beeindruckenden Arbeiten auf dem Gebiet der Zeolithmembranen gibt es noch keine großtechnische Anwendung von Zeolithmembranen in industriellen Gastrennverfahren, jedoch gibt es Erfolge bei der großtechnischen Nutzung von Zeolithmembranen im Bereich von membranbasierten Pervaporationsverfahren [J. Caro, M. Noack, Zeolite membranes - Recent developments and progress, Microporous Mesoporous Mater.2008, pp. 215-233].

Eine ideale Zeolithmembran benötigt eine nahezu perfekt dichte Zeolithschicht auf einem Träger, welcher dem System mechanische Stabilität verleiht, ohne jedoch die Trennung oder den Stofftransport zu beeinflussen. Die Dicke und Einheitlichkeit der polykristallinen Zeolithschicht beeinflusst direkt die Membranperformance in Bezug auf Fluss und Selektivität. Im Allgemeinen werden die Dicke und Einheitlichkeit der Zeolithschicht über die Kristallgröße und die Orientierung der Kristalle relativ zur Membranschicht gesteuert. Um eine Membran mit einer hohen Produktivität und Selektivität zu erhalten, wird eine ultradünne Membranschicht mit vernachlässigbaren zwischenkristallinen Defekten benötigt [E. Sjöberg, L. Sandström, O.G.W. Öhrman, J. Hedlund, Separation of CO2 from black liquor derived syngas using an MFI membrane, J. Membr. Sei., 443 (2013) 131 -137].

Die interkristallinen Poren (Risse und Fehlstellen) werden vermutlich durch die hohe Oberflächenladung der einzelnen Kristalle und auch durch die thermische Expansion von Einzelkristallen während der thermischen Behandlung gebildet. Diese interkristallinen Poren werden als Defekte bezeichnet und führen im Membrantrennverfahren zu einem nicht-selektiven Transport durch den Membranaufbau. Da die Zeolithmembran aus verwachsenen, polykristallinen Strukturen besteht, gibt es Probleme mit inhärenten Fehlstellen, welche durch Expansion bzw. Schrumpfung der Kristalle während der thermischen Behandlungszyklen (Heizen-Kühlen) des Kalzinierungs- oder Aktivierungsprozesses des Membranmaterials [M. Noack, M. Schneider, A. Dittmar, G. Georgi, J. Caro, The change of the unit cell dimension of different zeolite types by heating and its influence on supported membrane layers, Microporous Mesoporous Mater., 117 (2009) 10-21], sowie durch die gleichnamige Oberflächenladung der Kristalle von Al-reichen Zeolithen wodurch ein Zusammenwachsen der einzelnen Kristalle verhindert wird (Fehlstellen) [M. Noack, P. Kölsch, A. Dittmar, M. Stöhr, G. Georgi, M. Schneider, U. Dingerdissen, A. Feldhoff, J. Caro, Proof of the ISS-concept for LTA and FAU membranes and their characterization by extended gas permeation studies, Microporous Mesoporous Mater., 102 (2007) 1-20], hervorgerufen werden. Um eine ideale Zeolithmembran herzustellen, bei welcher der Transport nur über die regulären intrakristallinen Mikroporen stattfindet, müssten die interkristallinen Fehlstellen vermieden werden. Es gibt viele Versuche um dieses Problem zu überwinden, wie z.B. durch Modifikation der Syntheseroute, wiederholte Synthese oder durch verschiedene Nachbehandlungen. Durch Mikrowellen unterstütze Synthese wurden hochwertige Membranen erhalten [X. Xu, Y. Bao, C. Song, W. Yang, J. Liu, L. Lin, Microwave-assisted hydrothermal synthesis of hydroxy-sodalite zeolite membrane, Microporous Mesoporous Mater., 75 (2004) 173-181].

Große Defekte werden im Allgemeinen bei Membranen aus großen Kristallen beobachtet. Durch Verwendung von sehr kleinen Keimpartikeln und Synthesekondition mit geringem Kristallwachstum erhält man dünne Membranen mit kleiner Kristallgröße, welche nur eine geringe Defektgröße aufweisen [J. Hedlund, J. Sterte, M. Anthonis, A.- J. Bons, B. Carstensen, N. Corcoran, D. Cox, H. Deckman, W.D. Gijnst, P.-P. de Moor, F. Lai, J. McHenry, W. Mortier, J. Reinoso, J. Peters, High-flux MFI membranes, Microporous and Mesoporous Membranes2002, pp. 179-189].

Hochwertige Membranen mit vernachlässigbaren interkristallinen Poren wurden für einige Zeolithtypen beobachtet, welche durch die multiple in-situ Kristallisation hergestellt wurden [A. Avahle, D. Kaya, G.T.P. Mabande, T. Selvam, W. Schwieger, T. Stief, R. Dittmeyer, Defect-free zeolite membranes of the type BEA for organic vapour Separation and membrane reactor applications., Stud. Surf. Sei. Catal., 174 A (2008) 699-672].

Mit extrem kleiner Heizrate während der thermischen Behandlung wurde die Qualität der Membranen etwas verbessert, indem intrakristalline Makroporen in den Größenbereich von Mesoporen reduziert wurden [M. Noack, M. Schneider, A. Dittmar, G. Georgi, J. Caro, The change of the unit cell dimension of different zeolite types by heating and its influence on supported membrane layers, Microporous Mesoporous Mater., 117 (2009) 10-21].

Durch Auftragen einer nachträgliche Beschichtung mit einer Polyimidharzvorstufe durch Spincoating konnte die Selektivität von Zeolithmembranen für die Isomerentrennung von Xylol gesteigert werden [Deckmann, H (US); Corcoran, E (US); McHenry, J (US); Lai, W (US); Czarnetzki, L (NL); Wales, W (US); A zeolite containing composition with a selectivity enhancing coating, WO1996/001686, US1995/008513, 10. Juli 1995].

Ebenso konnte durch nachträgliche Beschichtung von hydrophoben Zeolithschichten (Silikalith) mit (hydrophoben) Silikon eine Reduzierung der Permeation für Wasser gefunden werden, sodass bei der Trennung von Wasserstoff/Wasser-Gemischen eine bevorzugte Wasserstoffpermeation gefunden wurde [EP 1 118 378 A1]. Dieses Prinzip wird in genannter Patentschrift theoretisch auch auf andere Membranen verschiedenster Zeolithe und auch auf Kohlenstoff als Beschichtungsmaterial ausgeweitet, wobei immer eine höhere Permeation von Wasserstoff als für Wasser postuliert wird. ZSM-5 Zeolithmembranen welche durch eine post-synthetische Kalzinierung unter Luftbeteiligung behandelt werden wurden in Yan et al., Preparation of highly selective zeolite ZSM-5 membranes by a post-synthetic coking treatment, Journal of Membrane Science, 123 (1997), 95-103 beschrieben.

Der Erfindung liegt die Aufgabe zugrunde, eine Permeationsmembran herzustellen bzw. anzugeben, die nur Stoffe durchlässt für die eine ideale Permeationsmembran, d. h. ohne inhärent auftretende Fehlstellen, konzipiert ist. Insbesondere soll dies auch auf die Permeation der sehr kleinen Wasser- und Wasserstoffmoleküle und deren Trennung zu Gunsten des Wassermoleküles zutreffen.

Erfindungsgemäß wird die Aufgabe durch eine Permeationsmembran gemäß Anspruch 1 gelöst, die aus einem Träger und einer kristallinen Substanz mit Zeolithstruktur, die Zeolithporen, Zwischenkornporen und Defekte aufweist, besteht, dadurch gekennzeichnet, dass in die kristalline Substanz mit Zeolithstruktur röntgenamorpher Kohlenstoff derart stellenweise eingelagert ist, dass die vorhandenen Zwischenkornporen und Defekte in der kristallinen Substanz durch den röntgenamorphen Kohlenstoff mindestens teilweise ausgefüllt sind, wobei ein Einbringen des röntgenamorphen Kohlenstoffs in die Zwischenkornporen und Defekte der der kristallinen Substanz mit Zeolithstruktur durch
- Infiltration eines organischen Precursors und anschließende Pyrolyse unter inerten Bedingungen, oder
- Kondensation eines dampfförmigen, organischen Prekursors und anschließende Pyrolyse unter inerten Bedingungen, oder
- reaktives Abscheiden einer verdampften organischen Spezies aus der Gasphase (Chemical Vapor Deposition), oder
- Pyrolyse überschüssigen Templates,
erfolgt ist,
wobei der röntgenamorphe Kohlenstoff keine messbare Porosität aufweist oder dessen Poren kleiner sind als die Zeolithporen.

Die kristalline Substanz kann vorteilhaft aus der Gruppe der Alumosilikate, Alumophosphate, Siliziumalumophosphate oder Metall-Organic-Frameworks ausgewählt werden.

Bei den kristallinen Substanzen mit Zeolithstruktur handelt es sich beispielsweise um Vertreter der Strukturen SOD, LTA, ERI, CHA, MFI und FAU.

Erfindungsgemäß weist der röntgenamorphe Kohlenstoff keine messbare Porosität auf oder zumindest sind dessen Poren kleiner als dieZeolithporen.

Die Aufgabe wird ferner mit einem Verfahren gemäß Anspruch 3 dadurch gelöst, dass zunächst eine Zeolithmembran hergestellt wird, die Zeolithporen, Zwischenkornporen und Defekte aufweist, und anschließend ein röntgenamorpher Kohlenstoff nur in die vorhandenen Zwischenkornporen und Defekte der Zeolithmembran eingebracht wird.

Das Einbringen des röntgenamorphen Kohlenstoffs in die Zwischenkornporen und Defekte der Zeolithmembran erfolgt erfindungsgemäß durch
- Infiltration eines organischen Precursors und anschließende Pyrolyse unter inerten Bedingungen, oder
- Kondensation eines dampfförmigen, organischen Prekursors und anschließende Pyrolyse unter inerten Bedingungen, oder
- reaktives Abscheiden einer verdampften organischen Spezies aus der Gasphase (Chemical Vapor Deposition), oder
- Pyrolyse überschüssigen Templates,
wobei der röntgenamorphe Kohlenstoff keine messbare Porosität aufweist oder dessen Poren kleiner sind als die Zeolithporen.

Dabei kann der Kohlenstoff auf verschiedenen Wegen in den Zwischenkornporen und Defekten einer Zeolithmembran abgeschieden werden.
- Durch Synthese einer Zeolithschicht auf einem porösen Träger mit einem hohen Anteil eines organischen Templats, also einer strukturdirigierenden Substanz zur Synthese der gewünschten Zeolithstruktur, und anschließende Pyrolyse der Zeolith/Templatschicht unter inerten Bedingungen bei erhöhter Temperatur (400 °C - 1.000 °C)
- Durch Infiltration einer dünnen Zeolithschicht mit einem flüssigen, organischen Prekursor ggf. gefolgt von einer Quervernetzung und anschließende Pyrolyse der Zeolith/Polymer-Schicht unter inerten Bedingungen bei erhöhter Temperatur (400 °C - 1.000 °C)
- Durch Kondensation verdampfbarer, organischer Substanzen in den Zwischenkornporen und Defekten einer Zeolithschicht und anschließende Pyrolyse der Zeolith/Polymer-Schicht unter inerten Bedingungen bei erhöhter Temperatur (400 °C - 1.000 °C)
- Durch direkte Umwandlung einer dampfförmigen, organischen Substanz in Kohlenstoff in den Zwischenkornporen und Defekten einer Zeolithschicht unter inerten Bedingungen bei erhöhter Temperatur (500 °C - 1.000 °C, Chemical Vapor Deposition (CVD-Verfahren)).

Dabei gelingt es, den Kohlenstoff so in den Zwischenkornporen und Defekten der Zeolithschicht abzuscheiden, dass die Zugänglichkeit der Zeolithporen nicht behindert wird. Dadurch entstehen Membranen erhöhter Selektivität (Trennschärfe) und reduzierter Permeanz (Fluss) im Vergleich zu reinen Zeolithmembranen mit ihren Fehlstellen. Überraschenderweise wurde dabei festgestellt, dass in einem Gemisch aus Wasser und Wasserstoff Wasser erheblich schneller die Membran passiert, wohingegen Wasserstoff nur in einem sehr geringen Maße, zum Teil unterhalb der detektierbaren Messgrenze durch die Membran permeiert.

Der wesentliche Vorteil der Erfindung besteht darin, dass eine Permeationsmembran wie die Zeolithmembran, die sich nicht ohne Fehlstellen herstellen lässt, im Nachgang diese Fehlstellen derart verschlossen werden, dass Stoffe die nur an diesen Fehlstellen hindurchtreten würden, nunmehr blockiert werden. Somit werden die Fehlstellen einer Permeationsmembran zwar nicht beseitigt aber deren Auswirkungen im Einsatz.

Die Erfindung soll nachstehend anhand von Ausführungsbeispielen näher erläutert werden. Die Zeichnungen zeigen:
- Fig. 1: Permporosimetrieuntersuchungen (He/ n-Hexan) der γ-Al₂O₃ Membranen im Ausgangszustand und im Vergleich nach der Behandlung mit Acetylen,
- Fig. 2: Einzelgaspermeanzen ausgewählter Gase an MFI Membranen nach der Herstellung (as-prepared) und nach der Behandlung mit Acetylen bei 750 °C mit einer Abscheidedauer von 45 min (post-treated). Die Messtemperatur betrug 150 °C.
- Fig. 3: aus den Einzelgaspermeanzmessungen errechnete idealen Permselektivitäten von H₂/SF₆ und He/SF₆ für MFI-Membranen

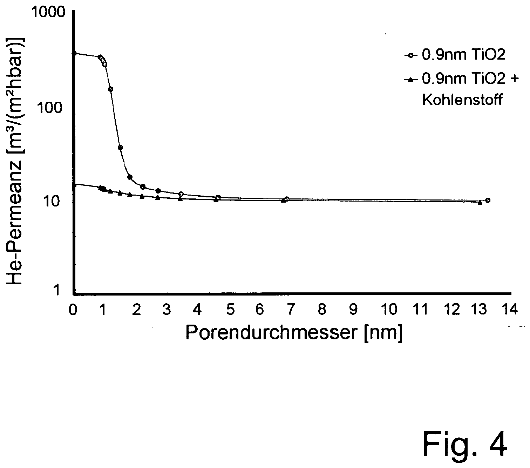

- Fig. 4: Permporosimetriemessung an einer keramischen Membran mit 0,9 nm Porendurchmesser vor und nach der Kohlenstoffinfiltration über Infiltration und Pyrolyse eines flüssigen Prekursors
- Fig. 5: Einzelgaspermeationsmessung an einer kohlenstoffinfiltrierten Zeolithmembran hergestellt durch Infiltration und Pyrolyse eines flüssigen Prekursors in eine Nanozeolithschicht
- Fig. 6: Permeanzen in binären 50:50 Gemischen aus H₂O und N₂, H₂O und CH₄, H₂O und CO₂ sowie H₂O und H₂ sowie dazugehörige H₂O/N₂-, H₂O/CH₄-, H₂O/CO₂- und H₂O/H₂-Permselektivitäten gemessen bei 200 °C, einem Feeddruck von 11 bar absolut und einem Permeatdruck von 1 bar bis 4 bar absolut an einer kohlenstoffinfiltrierten Zeolithmembran hergestellt durch Infiltration und Pyrolyse eines flüssigen Prekursors in eine Nanozeolithschicht (MFI)
- Fig. 7: Permeanzen der Einzelgase (He, CO₂ und N₂) und Mischgase (CO₂:N₂ 1:1 und 1:5) und der daraus resultierenden idealen und realen Selektivität für die Trennung der Gase CO₂ und N₂ bei 25 °C einer SAPO-34 Membran (SAPO-34/M), einer kohlenstoff-integrierten SAPO-34 Zeolithmembran (SAPO-34/CiZM, Infiltration durch Eintauchen) und eines kohlenstoff-integrierten α-Al₂O₃Trägers (CiAl₂O₃) und
- Fig. 8: Ramanspektrum eines kohlenstoff-integrierten α-Al₂O₃Trägers (CiAl₂O₃) und einer kohlenstoff-integrierten SAPO-34 Zeolithmembran (SAPO-34/CiZM).
- Fig. 9: XRD-Diffraktogramm einer SAPO-34 Zeolithmembran sowie einer kohlenstoff-integrierten SAPO-34 Zeolithmembran (SAPO-34/CiZM)

Wie bereits in der Beschreibungseinleitung beschrieben, benötigt eine Zeolithmembran einen Träger, welcher dem System mechanische Stabilität verleiht, ohne jedoch die Trennung oder den Stofftransport zu beeinflussen. Deshalb wird die Herstellung unterschiedlicher Träger vorangestellt, auf in den nachfolgenden Ausführungsbeispielen Bezug genommen wird:
1a) Eine über keramisches Folienziehen hergestellte poröse, keramische Tablette aus α-Al₂O₃ mit einem mittleren Porendurchmesser von 3 µm einem Durchmesser der Tablette von 18 mm und einer Dicke von 2 mm wurde schrittweise mit keramischen Schlickern aus α-Al₂O₃-Pulvern abnehmender Partikelgröße über Schleuderbeschichtung und anschließendes Sintern einseitig beschichtet, bis eine finale Deckschicht mit einem mittleren Porendurchmesser von 200 nm aufgebracht war.
1b) Ein über extrudieren hergestelltes poröses, keramisches Rohr aus α-Al₂O₃ mit einem mittleren Porendurchmesser von 3 µm einem Außendurchmesser von 10 mm, einem Innendurchmesser von 7 mm und einer Länge von 100 mm wurde schrittweise mit keramischen Schlickern aus α-Al₂O₃-Pulvern abnehmender Partikelgröße durch Schlickergießen und anschließendes Sintern auf der Innenseite beschichtet, bis eine finale Deckschicht mit einem mittleren Porendurchmesser von 100 nm aufgebracht war. Auf diese Deckschicht wurde ein kolloidales über einseitiges Tauchbeschichten aus einem kolloidalen Böhmitsol eine Gelschicht abgeschieden, die nach der Sinterung eine finale γ-Al₂O₃-Schicht mit einem mittleren Porendurchmesser zwischen 2 nm und 5 nm ergab.
1c) Ein Rohr gemäß Ausführungsbeispiel 1b) wurde nach der Beschichtung mit der 100 nm α-Al₂O₃-Schicht schrittweise mit einem kolloidalen TiO₂-, einem kolloidalen ZrO₂ und einem polymeren TiO₂-Sol beschichtet und jeweils zwischendurch thermisch behandelt. Die finale Deckschicht war aus amorphen TiO₂ und hatte einen mittleren Porendurchmesser von 0,9 nm.

### Ausführungsbeispiel 1 :

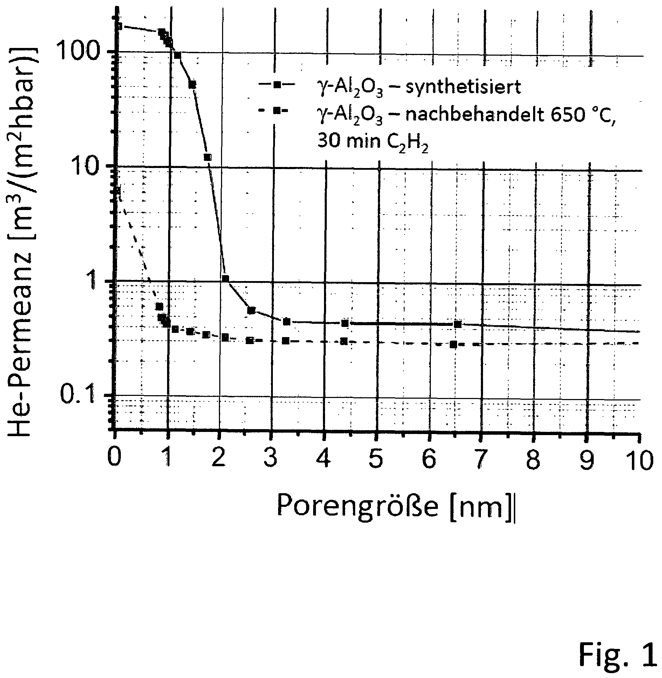

Eine Membran aus Ausführungsbeispiel 1b) wurde einem Abscheideprozess aus der Gasphase (Chemical Vapor Deposition, CVD) wie folgt unterzogen: Die Membran wurde in der heizkonstanten Zone eines Vertikalofens platziert. Bevor der Abscheideprozess startete, wurde eine Inertatmosphäre durch Spülen mittels Stickstoff geschaffen. Nach ausreichendem Spülen wurde der Ofen mit darin enthaltener Membran und inerter Atmosphäre auf Abscheidetemperatur von 650 °C geheizt. Nach Erreichen dieser, wurde die Gaszusammensetzung von 100 % Stickstoff auf 96,4 % Stickstoff (99,8 %, Linde) und 3,6 % Acetylen (99,6 %, Air Liquide) geändert. Die Dauer dieser Behandlung dauerte 30 min. Im Anschluss an die Kohlenstoffabscheidung wurde die Atmosphäre auf 100 % Stickstoff geändert und der Ofen kühlte auf Raumtemperatur ab, bevor die Probe entnommen wurde. Der analytische Nachweis erfolgte mittels Permporosimetrie mit He als permeable und n-Hexan als kondensierende Phase (Fig. 1).

Es zeigte sich, dass erwartungsgemäß die Ausgangsmembran einen Porendurchmesser von < 3 nm aufwies. Die He-Trockengaspermeanz lag bei ca. 180 m³/(m²·h·bar). Nach der Blockierung aller Poren < 3 nm fiel die He Permeanz auf ca. 0,42 m³/(m²·h·bar) was ca. 0,2% der Ausgangspermeanz entsprach. Die verbliebene Permeation entsprach dem Gasfluss durch Defekte >3 nm. Nach der Kohlenstoffabscheidung sank die He-Trockengaspermeation um den Faktor 30 auf ca. 6 m³/(m²·h·bar). Bereits mit den ersten 4 n-Hexan-Befeuchtungsschritten fiel die He-Permeanz auf ca. 0,4 m³/(m²·h·bar) um dann bei weiterer Befeuchtung weitestgehend konstant zu bleiben. Folglich war es durch die Kohlenstoffinfiltration mittels CVD-Verfahren bereits gelungen, Poren mit einem Durchmesser <3 nm auf einen Durchmesser <1 nm zu reduzieren. Größere Poren hingegen wurden nicht blockiert. Die angewendete Methode zur CVD-Abscheidung von Kohlenstoff eignet sich folglich zum Reduzieren des Durchmessers von Poren, die sich im Größenordnungsbereich von Defekten und Zwischenkornporen von Zeolithmembranen befinden.

### Ausführungsbeispiel 2:

Ein poröses keramisches Rohr mit einer finalen Deckschicht aus α-Al₂O₃ mit einem mittleren Porendurchmesser von 100 nm wurde über Schlickergießen mit einem Gemisch aus Silikalith-Partikeln, einem kolloidalen Kieselsol und Wasser im Masseverhältnis 1 :4:15 auf der Rohrinnenseite beschichtet. Die Schicht wurde bei 450 °C unter Luft eingebrannt. Anschließend erfolgte über 24 h bei 180 °C eine hydrothermale Behandlung im geschlossenen, teflonausgekleideten Autoklavbehälter in einer Lösung bestehend aus kolloidalem Kieselsol, Aluminium (Merck), Tetrapropylammoniumhydroxid (TPAOH 25%, Acros Organics), Tetrapropylammoniumbromid (>98 % TPABr, Alfa Aesar), Natriumhydroxidplätzchen (>99 %, VWR) und Wasser (deionisiert) im stöchiometrischen Verhältnis 90 SiO₂ / 0,225 Al₂O₃ / 1 Na₂O / 4,15 TPAOH / 1,85 TPABr / 1990 H₂O. Die entstehende MFI-Membran wurde bei 450 °C an Luft detemplatisiert.

Die MFI-Membran wurde entsprechend Ausführungsbeispiel 2 einer CVD-Behandlung mit einem 2,4 %igen Acetylen-Stickstoffgemisch unterzogen bei einer Abscheidedauer von 45 min und der Abscheidetemperatur von 750 °C. Sowohl die hergestellten als auch die behandelten Membranen wurden mittels Einzelgaspermeationsmessung mit ausgewählten Gasen untersucht.

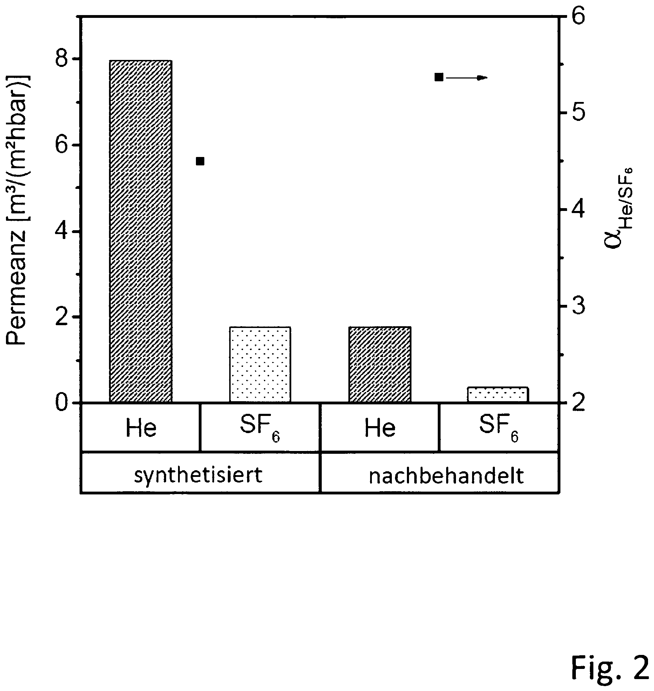

Bei Einzelgaspermeanzen in Fig. 2 wird deutlich, dass durch die CVD-Behandlung die Permeanzen aller Gase abnehmen und die ideale He/SF₆ Permselektivität von 4,5 auf 6,0 steigt. Diese Verbesserung erklärt sich durch ein kontrolliertes Verblocken von Defektporen bzw. Fehlstellen.

### Ausführungsbeispiel 3:

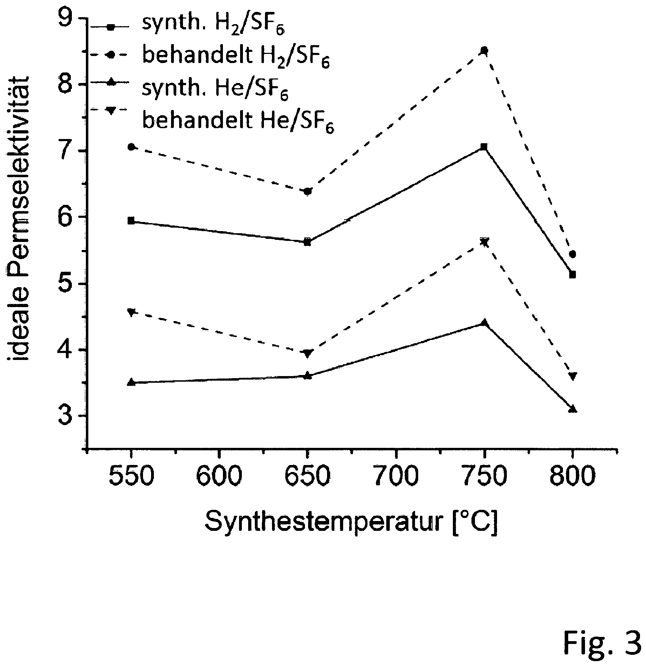

Eine MFI-Membran gemäß Ausführungsbeispiel 2 wurde mit n-Hexan (>99 %, Merck) als Dampfphase behandelt. Dazu wurde ein Stickstoffstrom mit n-Hexan beladen und für 45 min über die Membran geleitet wobei eine anliegende Temperatur von 550 - 800 °C für eine sofortige Pyrolyse des auskondensierenden n-Hexan führen sollte. Für alle Pyrolysetemperaturen konnte eine eindeutige Erhöhung der idealen H2/SF₆- und He/SF₆-Permselektivitäten ermittelt werden, was auf ein Verblocken der Zwischenkornporen zurückzuführen ist (Fig. 3).

### Ausführungsbeispiel 4:

Eine Membran gemäß 1c) wurde mit einer Mischung aus Phenolharzpulver (0235DP, Momentive) gelöst in Methanol (Merck) und 1-Methyl-2-pyrolidon (Merck) im Masseverhältnis 3,25:22,5:20 durch Einfüllen der Mischung in das keramische Membranrohr infiltriert. Anschließend erfolgte eine thermische Behandlung bei 150 °C zur Vernetzung des Phenolharzes gefolgt von einer Pyrolyse unter Ar bei 740 °C. Die Ausgangsmembran sowie die mit Kohlenstoff infiltrierte Membran wurde mittels Permporometrie unter Verwendung von He als Gasphase und n-Hexan als kondensierende Phase untersucht. Es zeigte sich, dass erwartungsgemäß die Ausgangsmembran einen Porendurchmesser von <2 nm aufwies. Die He-Trockengaspermeanz lag bei ca. 350 m³/(m²·h·bar). Nach der Blockierung aller Poren <2 nm fiel die He Permeanz auf ca. 12 m³/(m²·h·bar) was ca. 3% der Ausgangspermeanz entsprach. Die verbliebene Permeation entsprach dem Gasfluss durch Defekte > 2 nm. Die Permeanz durch Defekte > 4 nm betrug ca. 10 m³/(m²·h·bar) und somit 2 % der He-Trockengaspermeanz. Nach der Kohlenstoffabscheidung sank die He-Trockengaspermeation um den Faktor 30 auf ca. 12 m³/(m²·h·bar). Mit zunehmender n-Hexan-Befeuchtung war nur eine leichte Abnahme der He-Permeanz zu beobachten. Für Poren >4 nm lag die He-Permeanz identisch zur Membran ohne Kohlenstoffinfiltration bei 10 m³/(m²·h·bar). Folglich war es durch die Kohlenstoffinfiltration gelungen, Poren mit einem Durchmesser <4 nm weitestgehend zu blockieren. Größere Poren hingegen wurden nicht blockiert. Die angewendete Methode der Infiltration einer Membran mit einem flüssigen Prekursor und anschließende Pyrolyse eignet sich folglich zum Blockieren kleiner Poren, die sich im Größenordnungsbereich von Defekten und Zwischenkornporen von Zeolithmembranen befinden.

### Ausführungsbeispiel 5:

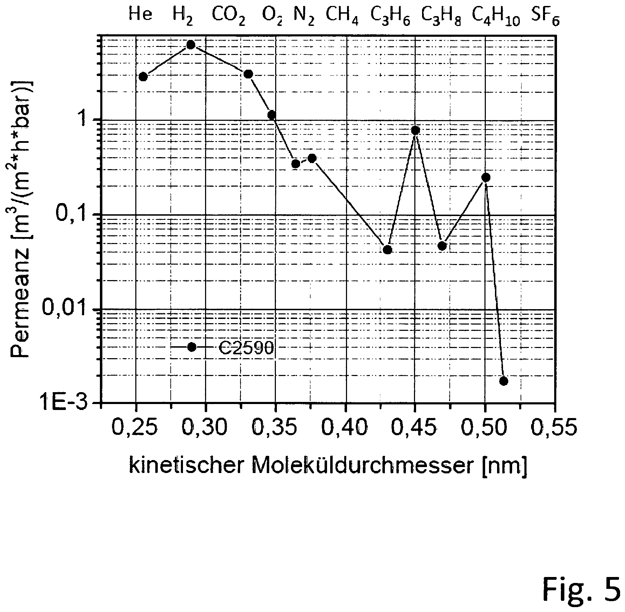

Eine rohrförmige, keramische Membran mit einer finalen Schicht aus γ-Al₂O₃ mit einem mittleren Porendurchmesser zwischen 2 nm und 5 nm gemäß 1b) wurden mit einer Schicht aus Zeolith-Nanokristallen hergestellt durch hydrothermale Synthese bei 60 °C über 14 Tagen in einer Mischung aus TPAOH, TPABr und TEOS (>99 %, ABCR) in einem molaren Verhältnis von 25 SiO₂ : 9 TPAOH : 360 H₂O : 100 Ethanol nach Person et al., Zeolites, 1994, Vol 14, Sept/Oct, 557-567*,* beschichtet. Die Beschichtung erfolgte durch Anheften der 50 nm bis 60 nm großen MFI-Kristalle an den porösen keramischen Untergrund unter Zuhilfenahme von Dimethylammoniumchlorid (65% in Wasser, Fluka) gemäß Hedlund et al.; J. Membr. Sc. 159 (1999) 263*.* Die so erhaltene Zeolithnanoschicht wurde bei 450 °C unter Luft kalziniert. Die Probe wurde anschließend mit Phenolharzpulver (0235DP, Momentive) gelöst in Methanol (Merck) und 1-Methyl-2-pyrolidon (Merck) im Masseverhältnis 3,25:22,5:20 einseitig infiltriert, gefolgt von einer Polymerisation bei 150 °C und einer Pyrolyse unter Ar bei 740 °C. Die erhaltene Kohlenstoffinfiltrierte Zeolithmembran wurde mittels Einzelgaspermeation bei 150 °C untersucht. Es zeigte sich eine He-Permeanz von 3 m³/(m²·h·bar), eine H₂-Permeanz von 6 m³/(m²·h·bar) und eine SF₆-Permeanz von ca. 0,002 m³/(m²·h·bar). Mit einer idealen He/SF₆-Permselektivität von ca. 1.650 und einer idealen H₂/SF₆-Permselektivität von ca. 3.600 liegt eine kohlenstoffinfiltrierte Zeolithmembran mit molsiebenden Trenneigenschaften vor. (Fig. 5)

Eine derart hergestellte Membran wird anschließend bei 200 °C mit Gasgemischen, bestehend zu je 50 % aus H₂O und N₂, H₂O und CH₄, H₂O und CO₂ sowie H₂O und H₂ bei 11 bar absolut beaufschlagt. Auf der Rückseite der Membran lag atmosphärischer Druck (1 bar absolut) oder ein leichter Überdruck (4 bar absolut) an. Der durch die

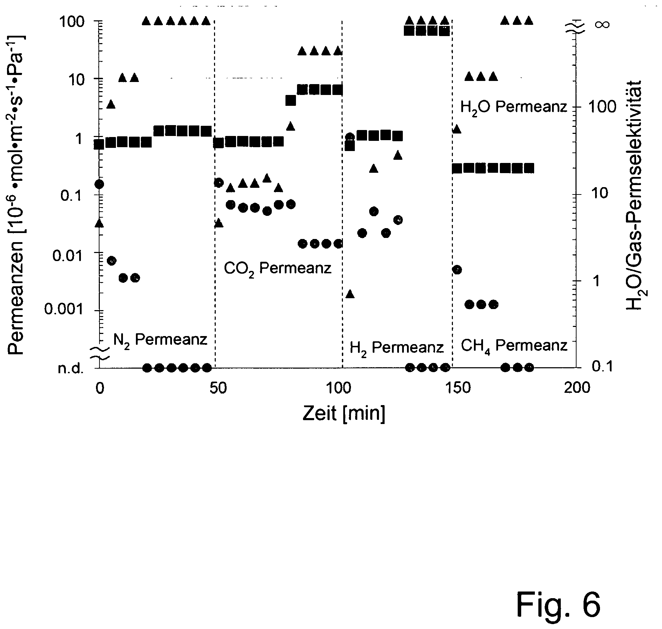

Membran hindurchtretende Gasstrom wurde durch eine Kühlfalle (-10 °C) geleitet, in der auftretendes Wasser auskondensiert wurde. Der verbliebene Gasstrom wurde mit einem multiscalen Blasenzählrohr gemessen. Es zeigte sich, dass nach dem Umschalten von einem Gasgemisch auf das nächste Gasgemisch nach kurzer Experimentierzeit, die Permeation des Gases CO₂ um den Faktor 10, die Permeation der Gase N₂, CH₄ und H₂ bis unterhalb der Messgrenze sank wohingegen die Wasserpemeation immer im erheblich höheren Permeationsbereich verblieb oder sogar stieg. Entsprechend wurden unendlich hohe H₂O/N₂-, H₂O/CH₄-, H₂O/H₂-Permselektivitäten sowie eine H₂O/CO₂-Permselektivität von 400 gemessen. Die Membran ist also in jedem Fall permeabel für Wasser, für andere Gase jedoch erheblich geringer permeabel bis vollkommen impermeabel (Fig. 6).

### Ausführungsbeispiel 6:

Zur Herstellung einer Zeolithmembran, die aus der aktiven Komponente SAPO-34 und einer porösen Trägerstruktur, α-Aluminiumoxid besteht, wird eine in-situ Kristallisation mittels hydrothermaler Synthese durchgeführt. Hierzu wird zunächst eine Syntheselösung wie folgt hergestellt: Das strukturdirigierende Agens (SDA), Tetraethylammoniumhydroxid (TEA-OH, 35 wt%, Sigma Aldrich) wird vorgelegt und mit der Siliziumquelle, Tetraethylorthosilikat (TEOS, 99 %, Alfa Aesar) und dem zusätzlich benötigten destilliertem Wasser versetzt. Diese erhaltene Lösung A wird für 10 min bei 600 rpm gerührt. Unter weiterem Rühren bei 600 rpm erfolgt die langsame Zugabe der Aluminiumquelle, Aluminiumisopropoxid (Al-isopropoxid zur Synthese, 98 %, Merck) und die entstehende Lösung B wird für weitere zwei Stunden gerührt. Zu dieser Lösung B wird die Phosphorquelle, ortho-Phosphorsäure (85 wt%, VWR) zugetropft. Die erhaltene Lösung C mit einer resultierenden molaren Zusammensetzung von 1,0 Al₂O₃ : 4,0 P₂O₅: 0,6 SiO₂ : 2,0 TEA-OH : 139 H₂O wird unter Rühren bei 600 rpm für 30 min gealtert. Anschließend werden 30 ml dieser gealterten Lösung C in einen Edelstahlautoklaven (45 ml, 4744, Parr Instruments) mit Tefloneinsatz überführt, in dem sich bereits der zu bekeimende α-Aluminiumoxid Träger gemäß 1 a) befindet. Die nachfolgende hydrothermale Synthese - in-situ Kristallisation - erfolgt statisch bei 180 °C für 48 h. Nach der benötigten Synthesezeit wird die erhaltenen SAPO-34 Membran (Träger, der innerhalb der in-situ Kristallisation mit SAPO-34 belegt wurde) von dem entstehenden SAPO-34 Überschusspulver mittels Zentrifugation abgetrennt. Die so synthetisierte SAPO-34 Membran wird zunächst bei 75 °C getrocknet und anschließend zur Templatentfernung kalziniert. Innerhalb des Kalzinierungsvorganges wird die SAPO-34 Membran unter Luft mit einer Heizrate von 0,2 K min⁻¹ auf 400 °C erhitzt, dieser Temperatur für 16 h ausgesetzt und anschließend langsam abgekühlt. Die Lagerung der hergestellten SAPO-34 Membran erfolgt in einem auf 100 °C geheizten Ofen.

### Ausführungsbeispiel 7:

Ausgehend von einer Zeolithmembran erfolgt die Herstellung einer kohlenstoffintegrierten Zeolithmembran durch zwei Verfahrensschritte:
1. Flüssiginfiltration der Zeolithmembran
2. Karbonisierung der infiltrierten Zeolithmembran

Zur Infiltrierung der hergestellten SAPO-34 Membran wird zunächst eine Lösung aus dem Monomer Furfurylalkohol (> 98,0 %, Merck) und Salpetersäure (HNOs, 65 wt%, Fluka) hergestellt. Hierzu wird der Furfurylalkohl vorgelegt und unter Rühren die benötigte Menge Salpetersäure hinzugetropft. Unter weiterem Rühren erfolgt eine Vorpolymerisierung dieser Lösung von 40 min. Nachfolgend wird die hergestellte SAPO-34 Membran für 5 min in diese Lösung eingetaucht. Die infiltrierten SAPO-34 Membranen werden zunächst zur Vernetzung der Polymere für 16 h bei 75 °C getrocknet und anschließend karbonisiert. Die Karbonisierung findet in Stickstoffatmosphäre bei 500 °C für 16 h statt. Die Heizrate beträgt hierbei ebenfalls 0,2 K min⁻¹.

### Ausführungsbeispiel 8:

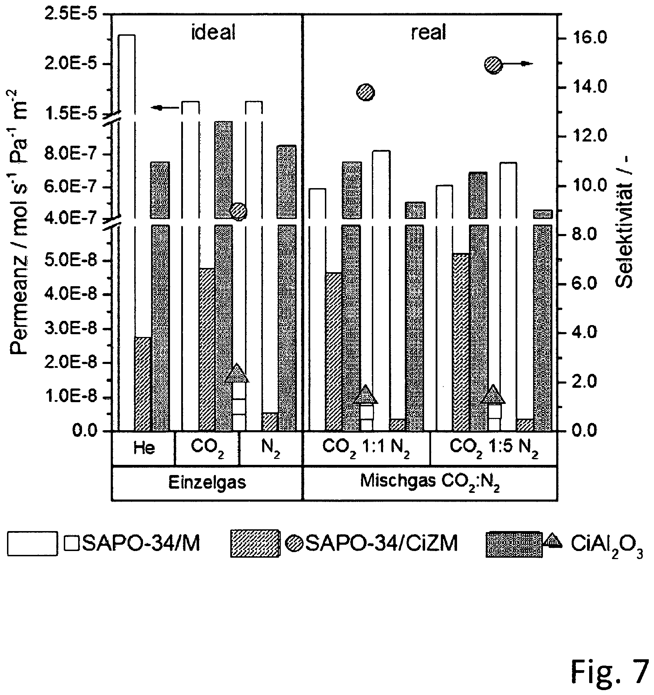

Als Vergleichssystem zu den hergestellten kohlenstoff-integrierten Zeolithmembranen wird ausgehend von einem α-Al₂O₃ Träger mit einer Porengröße von 200 nm nach 1a) ein kohlenstoff-integrierter α-Al₂O₃ Träger (CiAl₂O₃) hergestellt. Wie unter Ausführungsbeispiel 7 wird der α-Al₂O₃ Träger in eine vorpolymerisierte Lösung aus Furfurylalkohl und Salpetersäure getaucht, getrocknet und anschließend karbonisiert. Die hergestellte SAPO-34 Membran (SAPO-34/M, Ausführungsbeispiel 6), die kohlenstoff-integrierten SAPO-34 Membranen (SAPO-34/CiZM, Ausführungsbeispiel 7) sowie der kohlenstoff-integrierte α-Al₂O₃ Träger (CiAl₂O₃, Ausführungsbeispiel 8) werden mittels Permeanzmessungen von Einzelgasen und Mischgasen bei unterschiedlichen 25 °C) charakterisiert (Fig. 7) und daraus Selektivitäten für die Trennung von CO₂ und N₂ bestimmt.

Die reine SAPO-34-Membran wies sehr hohe Permeanzen im Größenordnungsbereich um 2 × 10⁻⁵ mol/(m²·s·Pa) (Einzelgaspermeation) bzw. um 7 × 10⁻⁷ mol/(m²·s·Pa) (Mischgaspermeation). Mit Permselektivitäten um 1 trat nahezu keine selektive Stofftrennung auf. Durch die Integration von Kohlenstoff sanken die Permeanzen auf Werte von 0,5 × 10⁻⁸ mol/(m²·s·Pa) (N₂) bis 5 × 10⁻⁸ mol/(m²·s·Pa) (CO₂) und die Permselektivitäten stiegen auf 9 (ideale Permselektivität der Einzelgasmessung) bis 14 bzw. 15 (Mischgasmessungen) was einer überaus selektiv trennenden Membran entspricht. Eine mit Kohlenstoff integrierte α-Al₂O₃-Membran mit einem Porendurchmesser von 200 nm wies hingegen nur Selektivitäten zwischen 1 und 2 auf. Folglich handelt es sich bei den Trenneigenschaften der kohlenstoffintegrierten Zeolithmembran um die Trenneigenschaften der Zeolithkristalle, deren Zwischenkornporen durch Kohlenstoff blockiert waren.

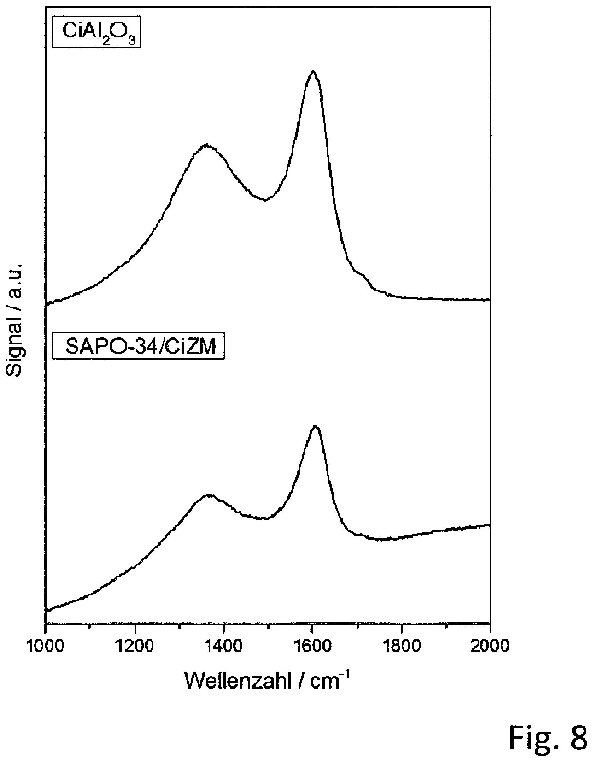

Die hergestellten Kohlenstoffspezies wurden weiterführend mittels Ramanspektroskopie untersucht. Die Ramanspektren beider Proben (in infiltrierter α-Al₂O₃-Träger mit 200 nm Poren und in Zwischenkornporen der infiltrierten Zeolithmembran) zeigen die für Kohlenstoff typischen Banden bei ca. 1350 cm⁻¹ und bei ca. 1590 cm⁻¹. Die Bande bei 1590 cm⁻¹ repräsentiert die Streckschwingung sp² hybridisierter Kohlenstoffbindungen in der Ebene. In amorphen Strukturen lässt sich neben dieser Bande eine weitere bei 1350 cm⁻¹ erkennen, die eine andere Symmetrie aufweist. Die Ramanspektren deuten auf eine amorphe Struktur von Kohlenstoff hin (Fig. 8).

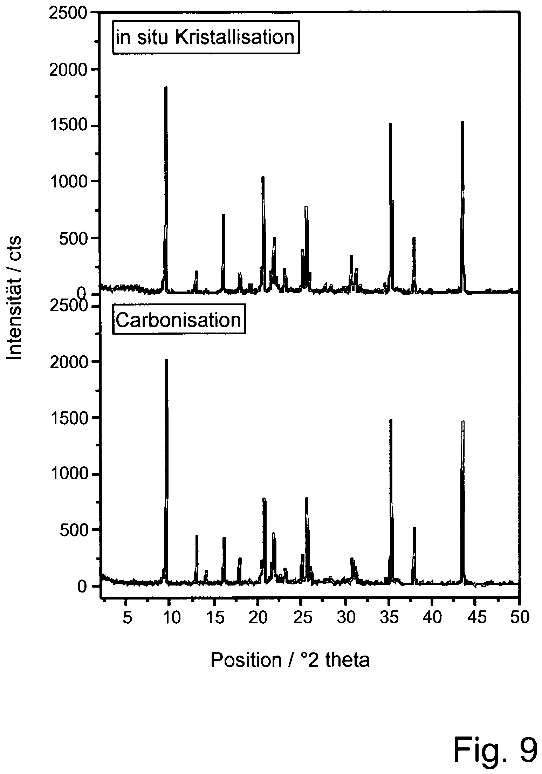

Eine reine Zeolithmembran auf α-Al₂O₃-Träger mit 200 nm Poren (SAPO-34/M) und eine nachträglich mit Kohlenstoff behandelte Zeolithmembran (SAPO-34(CiZM) wurden mittels Röntgendiffraktometrie untersucht (Fig. 9). In beiden Diffraktogramme konnten nur die charakteristischen Röntgenreflexe des Zeolithen und der α-Al₂O₃-Trägerkeramik gefunden werden. Der Kohlenstoff war nicht als kristalline Spezies auffindbar. Folglich handelte es sich beim infiltrierten Kohlenstoff um röntgenamorphen Kohlenstoff.

## Patentansprüche

1. Permeationsmembran bestehend aus einem Träger und einer kristallinen Substanz mit Zeolithstruktur, die Zeolithporen, Zwischenkornporen und Defekte aufweist,
**dadurch gekennzeichnet, dass** in die kristalline Substanz mit Zeolithstruktur ein röntgenamorpher Kohlenstoff derart stellenweise eingelagert ist, dass die vorhandenen Zwischenkornporen und Defekte in der kristallinen Substanz durch den röntgenamorphen Kohlenstoff mindestens teilweise ausgefüllt sind,
wobei ein Einbringen des röntgenamorphen Kohlenstoffs in die Zwischenkornporen und Defekte der kristallinen Substanz mit Zeolithstruktur durch
- Infiltration eines organischen Precursors und anschließende Pyrolyse unter inerten Bedingungen, oder
- Kondensation eines dampfförmigen, organischen Precursors und anschließender Pyrolyse unter inerten Bedingungen, oder
- reaktives Abscheiden einer verdampften organischen Spezies aus der Gasphase durch chemische Gasphasenabscheidung (CVD) unter inerten Bedingungen bei 500-1000°C, oder
- Pyrolyse unter inerten Bedingungen überschüssigen Templates aus der Synthese der Zeolithstruktur erfolgt ist,
wobei der röntgenamorphe Kohlenstoff keine messbare Porosität aufweist oder dessen Poren kleiner sind als die Zeolithporen.

2. Permeationsmembran nach Anspruch 1, **dadurch gekennzeichnet, dass** es sich bei den kristallinen Substanzen mit Zeolithstruktur um Vertreter der Strukturen SOD, LTA, ERI, CHA, MFI und FAU handelt.

3. Verfahren zur Herstellung einer Permeationsmembran nach den Ansprüchen 1 oder 2, mit den Schritten:
a) Herstellen einer Zeolithmembran, die Zeolithporen, Zwischenkornporen und Defekte aufweist,
b) Einbringen eines röntgenamorphen Kohlenstoffs nur in die Zwischenkornporen und Defekte der Zeolithmembran;
wobei das Einbringen des röntgenamorphen Kohlenstoffs in die Zwischenkornporen und Defekte der Zeolithmembran durch
- Infiltration eines organischen Precursors und anschließende Pyrolyse unter inerten Bedingungen, oder
- Kondensation eines dampfförmigen, organischen Precursors und anschließender Pyrolyse unter inerten Bedingungen, oder
- reaktives Abscheiden einer verdampften organischen Spezies aus der Gasphase durch chemische Gasphasenabscheidung (CVD) unter inerten Bedingungen bei 500-1000°C oder
- Pyrolyse unter inerten Bedingungen, überschüssigen Templates aus der Synthese der Zeolithstruktur, erfolgt,
wobei der röntgenamorphe Kohlenstoff keine messbare Porosität aufweist oder dessen Poren kleiner sind als die Zeolithporen.

4. Verwendung einer nach Anspruch 3 hergestellten Permeationsmembran zur Abtrennung von Wasser durch Permeation durch die Permeationsmembran aus Gemischen von Wasser mit Wasserstoff und/ oder Stickstoff und/ oder Methan und/oder Kohlendioxid.

## Claims

1. Permeation membrane consisting of a carrier and a crystalline substance having a zeolite structure including zeolite pores, intermediate grain pores and defects,
**characterized in that** an X-ray amorphous carbon is incorporated in such a way in places in the crystalline substance having a zeolite structure that the intermediate grain pores and defects present in the crystalline substance are at least partially filled by the X-ray amorphous carbon,
wherein an introduction of the X-ray amorphous carbon into the intermediate grain pores and defects of the crystalline substance with zeolite structure has been carried out by
- infiltration of an organic precursor and subsequent pyrolysis under inert conditions, or
- condensation of a vaporous, organic precursor and subsequent pyrolysis under inert conditions, or
- reactive deposition of a vaporized organic species from the gas phase by chemical vapor deposition (CVD) under inert conditions at 500-1000°C, or
- pyrolysis of excess templates from the synthesis of the zeolite structure under inert conditions,
wherein the X-ray amorphous carbon has no measurable porosity or its pores are smaller than the zeolite pores.

2. Permeation membrane according to claim 1, **characterized in that** the crystalline substances with zeolite structure are representatives of the structures SOD, LTA, ERI, CHA, MFI and FAU.

3. A method of producing a permeation membrane according to claims 1 or 2, comprising the steps of:
a) production of a zeolite membrane which includes zeolite pores, intermediate grain pores and defects,
b) introduction of an X-ray amorphous carbon only into the intermediate grain pores and defects of the zeolite membrane;
wherein the introduction of the X-ray amorphous carbon into the intermediate grain pores and defects of the zeolite membrane is carried out by
- infiltration of an organic precursor and subsequent pyrolysis under inert conditions, or
- condensation of a vaporous, organic precursor and subsequent pyrolysis under inert conditions, or
- reactive deposition of a vaporized organic species from the gas phase by chemical vapor deposition (CVD) under inert conditions at 500-1000°C, or
- pyrolysis of excess templates from the synthesis of the zeolite structure under inert conditions,
wherein the X-ray amorphous carbon has no measurable porosity or its pores are smaller than the zeolite pores.

4. Use of a permeation membrane produced according to claim 3 for separating water by permeation through the permeation membrane from mixtures of water with hydrogen and/or nitrogen and/or methane and/or carbon dioxide.

## Revendications

1. Membrane de perméation constituée d'un support et d'une substance cristalline à structure zéolitique présentant des pores zéolitiques, des pores inter-granulaires et des défauts,
**caractérisée en ce qu'**un carbone amorphe aux rayons X est incorporé par endroits dans la substance cristalline à structure zéolitique de telle manière que les pores inter-granulaires et les défauts présents dans la substance cristalline sont au moins partiellement remplis par le carbone amorphe aux rayons X,
où l'introduction du carbone amorphe aux rayons X dans les pores inter-granulaires et dans les défauts de la substance cristalline à structure zéolitique intervient par
- infiltration d'un précurseur organique, suivie d'une pyrolyse dans des conditions inertes, ou
- condensation d'un précurseur organique sous forme de vapeur, suivie d'une pyrolyse dans des conditions inertes, ou
- séparation réactive d'une espèce organique vaporisée, à partir de la phase gazeuse, par dépôt chimique en phase vapeur (CVD) dans des conditions inertes, entre 500 et 1000°C, ou
- pyrolyse, dans des conditions inertes, de matrices excédentaires issues de la synthèse de la structure zéolitique,
a été effectuée,
le carbone amorphe aux rayons X ne présentant pas de porosité mesurable ou ses pores étant plus petits que les pores de la zéolithe.

2. Membrane de perméation selon la revendication 1, **caractérisée en ce que** les substances cristallines à structure zéolitique sont des représentantes des structures SOD, LTA, ERI, CHA, MFI et FAU.

3. Procédé de fabrication d'une membrane de perméation selon la revendication 1 ou 2, comprenant les étapes ci-dessous consistant à :
a) fabriquer une membrane zéolitique présentant des pores zéolitiques, des pores inter-granulaires et des défauts,
b) introduire un carbone amorphe aux rayons X uniquement dans les pores inter-granulaires et dans les défauts de la membrane zéolitique ;
où l'introduction du carbone amorphe aux rayons X dans les pores inter-granulaires et dans les défauts de la membrane zéolitique intervient par
- infiltration d'un précurseur organique, suivie d'une pyrolyse dans des conditions inertes, ou
- condensation d'un précurseur organique sous forme de vapeur, suivie d'une pyrolyse dans des conditions inertes, ou
- séparation réactive d'une espèce organique vaporisée, à partir de la phase gazeuse, par dépôt chimique en phase vapeur (CVD) dans des conditions inertes, entre 500 et 1000°C, ou
- pyrolyse, dans des conditions inertes, de matrices excédentaires issues de la synthèse de la structure zéolitique,
est effectuée,
le carbone amorphe aux rayons X ne présentant pas de porosité mesurable ou ses pores étant plus petits que les pores de la zéolithe.

4. Utilisation d'une membrane de perméation fabriquée selon la revendication 3 permettant de séparer de l'eau par perméation à travers ladite membrane de perméation à partir de mélanges d'eau et d'hydrogène et/ou d'azote et/ ou de méthane et/ou de dioxyde de carbone.
